# FASCICULE DE BREVET EUROPEEN

(11) **EP 0 678 877 B1**
(45) Date de publication et mention de la délivrance du brevet: **11.03.1998**
(21) Numéro de dépôt: 95870008.0
(22) Date de dépôt: 07.02.1995
(51) Int. Cl.: G21C 19/07, G21F 5/012

(54) **Méthode de conception et de fabrication de râteliers de stockage de combustibles irradiés provenant de centrales nucléaires**
Verfahren zur Konzeption und zur Fertigung von Lagergestellen für bestrahlten Brennstoff aus Kernkraftwerken
Method for the conception and fabrication of storage racks for irradiated fuel produced by nuclear power plants

(30) Priorité: 11.02.1994 BE 9400163
(43) Date de publication de la demande: 25.10.1995
(73) Titulaire: Mécanique de Précision pour Equipements S.A., 1120 Bruxelles (BE)
(72) Inventeur: Chevalier,Jean-Pierre, B-1120 Bruxelles (BE)

(56) Documents cités:
- DATABASE WPI Week 8826, Derwent Publications Ltd., London, GB; AN 88-180215 & JP-A-63 118 693 (TOSHIBA) 23 Mai 1988
- PATENT ABSTRACTS OF JAPAN vol. 16, no. 335 (M-1283) 21 Juillet 1992 & JP-A-04 099 806 (NKK CORP) 31 Mars 1992
- PATENT ABSTRACTS OF JAPAN vol. 11, no. 361 (C-459) 25 Novembre 1987 & JP-A-62 133 047 (SUMIMOTO SPECIAL METALS CO) 16 Juin 1987
- DATABASE WPI Week 8815, Derwent Publications Ltd., London, GB; AN 88-101275 & JP-A-63 050 429 (NIPPON KOKAN KK) 3 Mars 1988
- DATABASE WPI Week 9345, Derwent Publications Ltd., London, GB; AN 93-357438 & JP-A-5 263 133 (NIPPON STEEL CORP) 12 Octobre 1993

## Description

L'invention concerne une méthode de conception et de fabrication de râteliers de stockage en piscine d'assemblages de combustibles irradiés provenant de centrales nucléaires.

Dans le cycle de vie du combustible nucléaire, les assemblages de combustibles irradiés retirés du coeur du réacteur doivent séjourner un certain temps dans une piscine remplie d'eau.

La structure supportant ces assemblages est appelée râtelier.

Les râteliers doivent assurer trois fonctions principales pour éviter tout accident dans des circonstances normales ou accidentelles.

Les râteliers maintiennent le stockage dans des conditions neutroniques sous-critiques grâce au pas du stockage, c'est à dire en positionnant les assemblages à une certaine distance les uns des autres, et en les complétant grâce à l'interposition entre les assemblages de matériaux neutrophages.

Les râteliers doivent aussi protéger les assemblages contre les sollicitations mécaniques pouvant provoquer des ruptures des crayons de combustible constituant les assemblages.

Les râteliers doivent permettre le refroidissement, souvent par convection naturelle, pour éviter des contraintes thermiques préjudiciables aux crayons de combustible.

En outre, les méthodes de conception et de fabrication doivent garantir des tolérances géométriques serrées. Toute réduction du pas se traduit par un avantage économique.

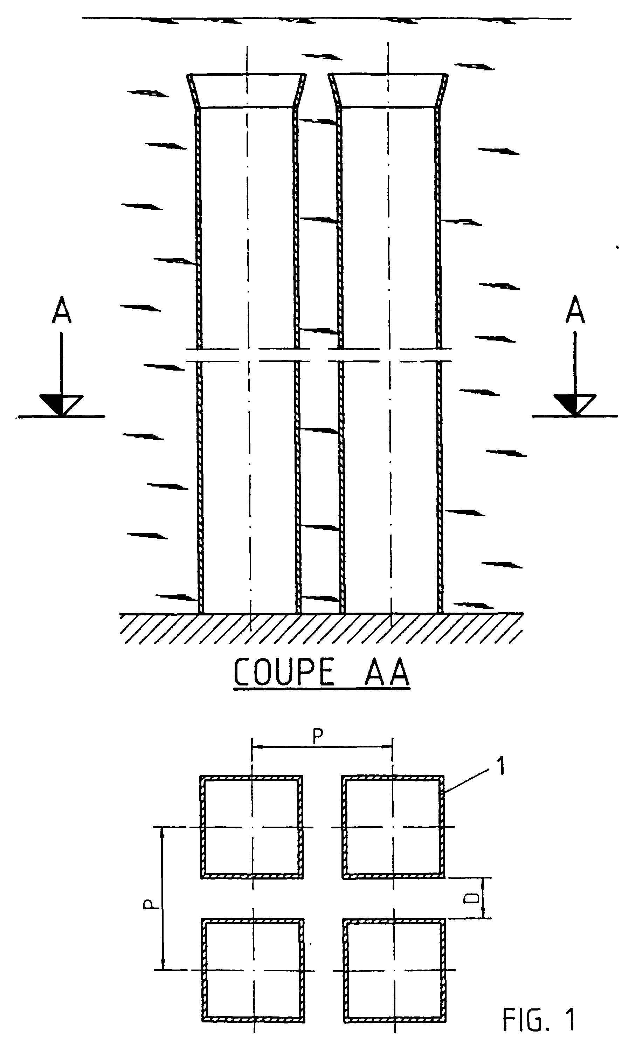

La conception classique de ces râteliers est représentée en figure 1.

Cette figure représente schématiquement la disposition de tubes carrés (1) disposés selon une maille carrée. Cette maille a pour dimension (P).

L'espace (D) entre les tubes est calculé pour permettre une dissipation thermique suffisante et le maintien de conditions neutroniques sous-critiques.

L'eau est l'agent neutrophage. Des additions d'acide borique améliorent cette particularité.

Pour des raisons de tenue à la corrosion les tubes sont réalisés en acier inoxydable austénitiques.

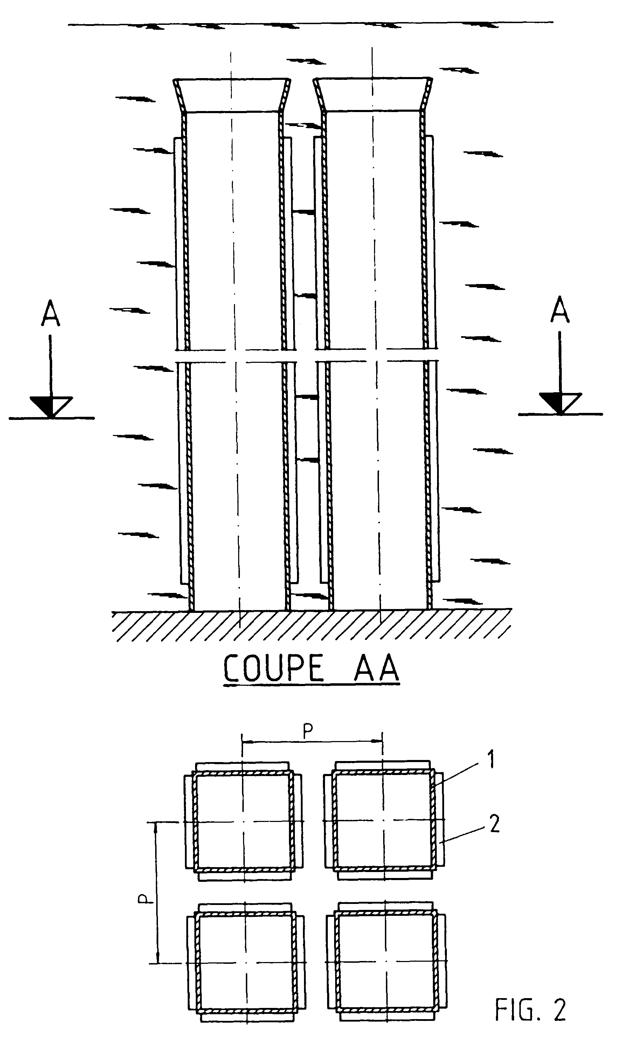

Une amélioration de ce procédé est représenté en figure 2.

Cette figure montre que les tubes en acier inoxydable austénitique (1) sont revêtus extérieurement de plaques de blindage (2). Ces plaques sont réalisées dans divers matériaux chargés de bore.

Elles participent à l'atténuation de flux de neutrons et avec les mêmes sécurités que ci-avant le pas (P) peut être réduit par rapport à une conception classique.

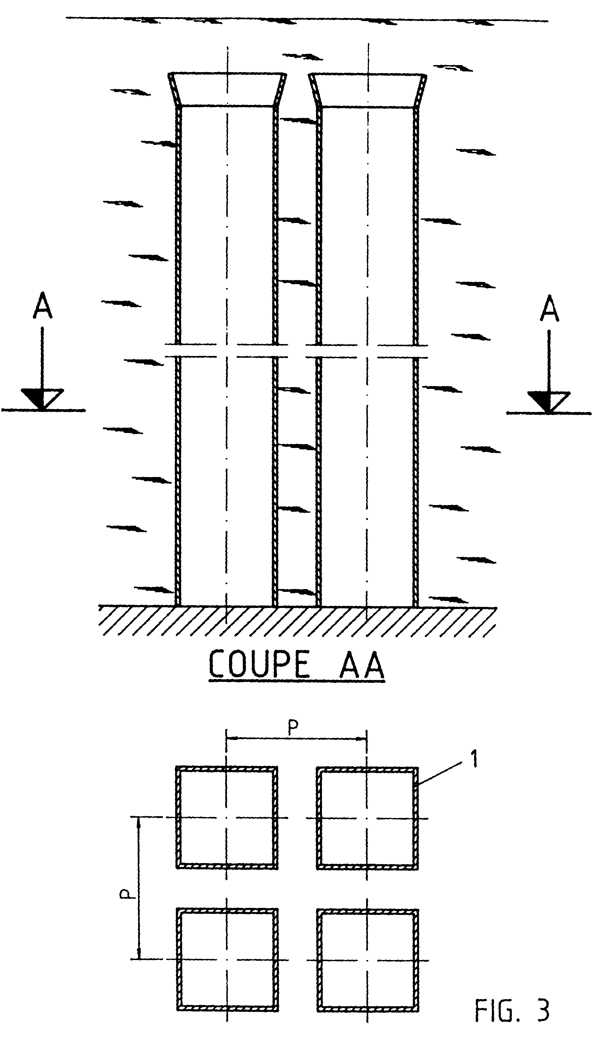

Une autre amélioration est représentée en figure 3.

Cette figure est semblable à la figure 1 mais ici, le matériau constituant les tubes (1) est un alliage inoxydable austénitique lui-même allié au bore.

Les tubes jouent ainsi le rôle de structure porteuse et d'élément neutrophage. Le pas (P) peut être réduit par rapport à une conception classique.

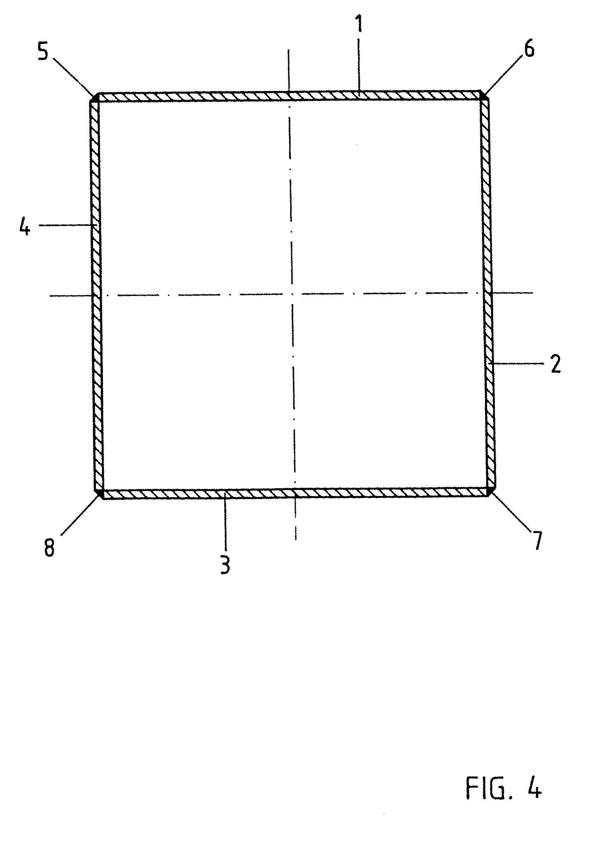

La fabrication de tels tubes est schématiquement représentée en fig 4, 4 plaques (1, 2, 3, 4) sont assemblées par 4 cordons de soudure (5, 6, 7, 8) de type MIG, TIG...

Cette méthode présente deux inconvénients :
- Déformations due à la soudure compromettant le respect des tolérances géométriques.
- Modification structurelle des aciers chargés au bore dans la zone de soudage se traduisant par des appauvrissements localisés en chrome et accroissant le risque de corrosion par pitting.

La présente invention a pour but de remédier aux inconvénients de systèmes précités.

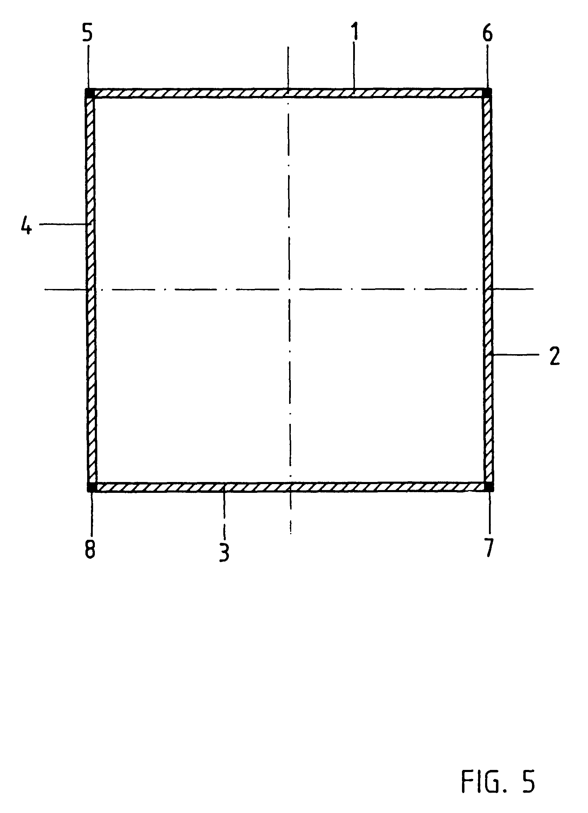

Les avantages obtenus grâce à cette invention sont :
- Une diminution du pas.
- Une meilleure résistance à la corrosion.
- Une limitation des déformations.
- L'invention est exposée ci-après plus en détail à l'aide d'un dessin. La figure 5 représente une coupe d'un tube carré constitué de plaques (1, 2, 3, 4) en acier inoxydable austénitique allié au bore. Les soudures aux angles (5, 6, 7, 8) sont réalisées par soudure laser.
   Ces tubes carrés sont disposés selon un réseau carré dont le pas (P) peut être réduit, par rapport à une conception classique.

## Revendications

1. Méthode de conception et de fabrication de râteliers de stockage de combustible irradié provenant de centrales nucléaires qui consiste dans l'emploi de tubes carrés constitués de plaques en alliage inoxydable austénitique allié au bore caractérisée en ce que lesdites plaques sont soudées par soudure laser.

## Patentansprüche

1. Verfahren zur Konzeption und zur Fertigung von Lagergestellen für bestrahlten Brennstoff aus Kemkraftwerken ; das Verfahren sieht die Verwendung von quadratischen Rohren bestehend aus Blechen in austenetischen bohriegierten Rostfreistahl vor, die mit einem Laserstrahl geschweisst wurden.

## Claims

1. Method for the conception and fabrication of storage racks for irradiated fuel produced by nuclear power plants, involving the use of square tubes made up of plates of borated austenitic stainless steel characterized in that the said plates are welded together by laser welding.
